# EUROPÄISCHE PATENTSCHRIFT

(11) **EP 2 745 390 B1**
(45) Veröffentlichungstag und Bekanntmachung des Hinweises auf die Patenterteilung: **11.10.2017**
(21) Anmeldenummer: 12751016.2
(22) Anmeldetag: 02.08.2012
(51) Int. Cl.: H02M 1/00, H02M 7/48, H02J 3/38

(54) **POTENZIALDEFINITION VON EINGANGSLEITUNGEN EINES WECHSELRICHTERS**
POTENTIAL DEFINITION OF INPUT LINES OF AN INVERTER
DÉFINITION DU POTENTIEL DE LIGNES D'ENTRÉE D'UN ONDULEUR

(30) Priorität: 19.08.2011 DE 102011052849
(43) Veröffentlichungstag der Anmeldung: 25.06.2014
(73) Patentinhaber: SMA Solar Technology AG, 34266 Niestetal (DE)
(72) Erfinder: VOGT, Wilfried, 34125 Kassel (DE)
(86) Internationale Anmeldenummer: PCT/EP2012/065118
(87) Internationale Veröffentlichungsnummer: WO 2013/026671

(56) Entgegenhaltungen:
- EP-A1- 1 971 018
- EP-A2- 0 899 859

## Beschreibung

### TECHNISCHES GEBIET DER ERFINDUNG

Die Erfindung bezieht sich auf ein Verfahren zur Definition eines elektrischen Potenzials von Eingangsleitungen eines Wechselrichters gegenüber Erde sowie auf einen Wechselrichter mit Eingangsleitung zum Anschluss an eine Gleichstromquelle, Ausgangsleitungen zum Ausgeben eines Wechselstroms und Einrichtungen zur Definition eines elektrischen Potenzials der Eingangsleitungen gegenüber Erde.

Insbesondere fällt die vorliegende Erfindung auf das technische Gebiet des Einspeisens von elektrischer Leistung von einem Photovoltaikgenerator in ein Wechselstromnetz. Das Wechselstromnetz kann insbesondere ein öffentliches Stromnetz aber auch ein Inselnetz sein. Je nach Aufbau der Module des Photovoltaikgenerators kann es für eine lange Lebensdauer vorteilhaft oder sogar erforderlich sein, den Photovoltaikgenerator insgesamt auf positivem oder negativem elektrischen Potenzial gegenüber Erde zu halten, um negative bzw. positive Spannungen der Module gegenüber ihrer Umgebung zu vermeiden. Dies gilt insbesondere bei so genannten Dünnschichtmodulen.

### STAND DER TECHNIK

Die europäische Patentanmeldung EP0899859 offenbart einen Wechselrichter (Figuren 4 bis 6) an dessen Ausgangsleitungen in Stern geschaltete und über ein RC-Glied (38) an einer Wechselrichtereingangsleitung (14) anliegende Kondensatoren (23, 25, 26, 36) angeschlossen sind.

In der DE 20 2006 008 936 U1 wird als bekannte Maßnahme zum Schutz von so genannten Dünnschichtmodulen gegen so genannte TCO-Korrosion beschrieben, den negativen Anschluss eines Photovoltaikgenerators zu erden bzw. mit dem Nullleiter eines angeschlossenen Wechselstromnetzes zu verbinden, so dass die Solarmodule kein negatives elektrisches Potenzial gegenüber Erde und damit gegenüber ihrer Umgebung annehmen können. Als dortige Erfindung wird in der DE 20 2006 008 936 U1 beschrieben, den negativen Anschluss des Photovoltaikgenerators sogar auf ein positives Potenzial gegenüber Erde anzuheben. Hierzu soll eine Vorspannungsquelle in einer Bypassleitung zwischen dem Null- oder Schutzleiter des Wechselstromnetzes und dem negativen Anschluss des Photovoltaikgenerators vorgesehen werden. Sowohl das unmittelbare Verbinden des negativen Anschlusses eines Photovoltaikgenerators mit dem Nullleiter eines Wechselstromnetzes als auch die Zwischenordnung einer Vorspannungsquelle, die den negativen Anschluss auf ein gegenüber dem Nullleiter positives Potenzial anhebt, setzt einen Wechselrichter mit galvanischer Trennung zwischen dem Photovoltaikgenerator und dem Wechselstromnetz voraus.

Zur galvanischen Trennung können Wechselrichter bekanntermaßen einen Transformator aufweisen. Ist dieser Transformator für den ausgegebenen Wechselstrom mit Netzfrequenz und zur Übertragung einer größeren elektrischen Leistung vorgesehen, handelt es sich um ein großes und insbesondere schweres sowie kostspieliges Bauteil. Deshalb werden vielfach HF-Transformatoren als Teil eines DC/DC-Wandlers zur galvanischen Trennung verwendet. Hier können die Transformatoren selbst zwar kleiner ausfallen, es ist aber zusätzlicher Schaltungsaufwand zu betreiben.

Aus der WO 2010/069620 A1 und der US 2010/0008105 A1, die zur selben Patentfamilie gehören, ist ein transformatorloser Wechselrichter mit einem DC/DC-Wandier bekannt, bei dem einer Wechselrichterbrücke ein DC/DC-Wandler vorgeschaltet ist. Der DC/DC-Wandler weist Reihenresonanzkreise mit Resonanzkapazitäten auf, die eine galvanische Trennung zwischen den Eingangsleitungen des Wechselrichters und den Eingangsleitungen der Wechselrichterbrücke bewirken. Hierdurch ist es möglich, das Potenzial eines an die Eingangsleitungen des Wechselrichters angeschlossenen Photovoltaikgenerators gegenüber Erde frei zu wählen, indem irgendein Punkt des Photovoltaikgenerators mit Erde oder einem gegenüber Erde definierten Bezugspotential elektrisch leitend verbunden wird. Zwar ist hierfür kein Transformator erforderlich, wohl aber der zusätzliche DC/DC-Wandler vor der Wechselrichterbrücke. In Folge der Wahl des Potenzials des Photovoltaikgenerators werden sich die Resonanzkapazitäten auf eine Gleichspannung aufladen, was jedoch in den genannten Dokumenten nicht angesprochen ist.

### AUFGABE DER ERFINDUNG

Der Erfindung liegt die Aufgabe zugrunde, ein Verfahren zur Definition eines elektrischen Potenzials von Eingangsleitungen eines Wechselrichters gegenüber Erde und einen Wechselrichter mit Eingangsleitungen zum Anschluss an eine Gleichstromquelle, Ausgangsleitungen zum Ausgeben eines Wechselstroms und Einrichtungen zur Definition eines elektrischen Potenzials der Eingangsleitungen gegenüber Erde bereitzustellen, mit denen die Definition des elektrischen Potenzials der Eingangsleitung gegenüber Erde möglichst unabhängig von dem Aufbau des Wechselrichters mit geringem Aufwand möglich ist.

### LÖSUNG

Die Aufgabe der Erfindung wird durch ein Verfahren mit den Merkmalen des unabhängigen Patentanspruchs 1 und einen Wechselrichter mit den Merkmalen des unabhängigen Patentanspruchs 9 gelöst. Die abhängigen Patentansprüche 2 bis 8 sind auf bevorzugte Ausführungsformen des neuen Verfahrens, die abhängigen Patentansprüche 10 bis 14 auf bevorzugte Ausführungsformen des neuen Wechselrichters gerichtet. Der nebengeordnete Patentanspruch 15 betrifft eine bevorzugte Verwendung des erfindungsgemäßen Wechselrichters.

### WEITERER STAND DER TECHNIK

Aus Klumpner, C., et al. "A More Efficient Current Source Inverter with Series Connected AC Capacitors for Photovoltaik and Fuel Cell Applications" Proceedings PCIM Europe 2009 Conference, Seiten 153 bis 158, ISBN: 978-3-8007-3158-9 ist ein Wechselrichter bekannt, dessen Eingangsleitungen, die zum Anschluss an einen Photovoltaikgenerator vorgesehen sind, direkt zu einer Wechselrichterbrücke führen. In den Ausgangsleitungen der Wechselrichterbrücke sind Kondensatoren angeordnet. Es ist jedoch nicht vorgesehen, diese Kondensatoren auf eine Gleichspannung aufzuladen. Das genannte Dokument beschäftigt sich überhaupt nicht mit der Definition eines elektrischen Potenzials der Eingangsleitungen der Wechselrichterbrücke und damit des angeschlossenen Photovoltaikgenerators gegenüber Erde.

### BESCHREIBUNG DER ERFINDUNG

Beim neuen Verfahren zur Definition eines elektrischen Potenzials von Eingangsleitungen eines Wechselrichters gegenüber Erde werden in allen stromführenden Ausgangsleitungen des Wechselrichters Kondensatoren angeordnet und auf eine Gleichspannung aufgeladen. Hierdurch verschiebt sich das elektrische Potenzial der Eingangsleitungen des Wechselrichters gegenüber einem an den stromführenden Ausgangsleitungen des Wechselrichters vorliegenden Bezugspotenzial um diese Gleichspannung. Dies gilt, soweit der Wechselrichter keine galvanische Trennung zwischen seinen Eingangsleitungen und seinen Ausgangsleitungen aufweist. Mit Hilfe dieser Verschiebung kann das elektrische Potenzial einer der Eingangsleitungen des Wechselrichters auf einen gewünschten Wert eingestellt werden. Das Potenzial der anderen Eingangsleitungen weicht hiervon um die Spannung einer an die Eingangsleitungen angeschlossenen Gleichstromquelle ab und ist insoweit ebenfalls gegenüber Erde definiert.

Vorzugsweise werden die Kondensatoren in den Ausgangsleitungen des Wechselrichters sämtlich auf dieselbe Gleichspannung aufgeladen. Eine solche gleichmäßige Aufladung der Kondensatoren stellt sich im Regelfall aber auch automatisch ein, wenn nur einer der Kondensatoren in einer der stromführenden Ausgangsleitungen des Wechselrichters aufgeladen wird.

Konkret können die Kondensatoren über eine Ladeleitung aufgeladen werden, die von einem Punkt hinter einem der Kondensatoren in einer der Ausgangsleitungen bis zu einem Punkt vor diesem Kondensator führt und die nur während des Aufladens elektrisch leitend ist. Dazu zählt es, die Gleichspannung für den Ladevorgang mit einer Spannungsquelle unmittelbar über dem Kondensator aufzubringen.

Auch ohne Spannungsquelle kann das Aufladen erfolgen, wenn die Ladeleitung von einem Punkt hinter dem Kondensator in der Ausgangsleitung zu einem Nullleiter bis zu der Eingangsleitung führt, deren elektrisches Potenzial gegenüber Erde definiert werden soll, wobei eine Diode in der Ladeleitung angeordnet ist. Durch die Diode fließt so lange Strom, der den Kondensator in der Ausgangsleitung zu dem Nullleiter auflädt, bis das elektrische Potenzial der jeweiligen Eingangsleitung nicht mehr unter das Potenzial des Nullleiters als Bezugspotenzial abfällt oder nicht mehr über dieses Bezugspotenzial ansteigt, je nach Durchlassrichtung der Diode.

Die Kondensatoren können auch über eine Ladeleitung aufgeladen werden, die von einem Punkt hinter dem Kondensator in der Ausgangsleitung zu dem Nullleiter bis zu einem Zwischenpunkt eines Spannungsteilers zwischen den Eingangsleitungen führt und die nur während des Aufladens elektrisch leitend ist. Beispielsweise kann in der Ladeleitung eine Diode angeordnet sein. In diesem Fall fließt so lange Strom durch die Diode, bis das elektrische Potenzial dieses Zwischenpunkts je nach Durchlassrichtung der Diode das Potenzial des Nullleiters nicht mehr unterschreitet bzw. überschreitet.

Anstatt die Ladeleitung von einem Punkt hinter einem der Kondensatoren in einer der Ausgangsleitungen bis zu einem Punkt vor diesem Kondensator, das heißt über einen der Kondensatoren in einer der Ausgangsleitungen hinweg, zu führen, kann die Ladeleitung auch von Erde bis zu einem Punkt vor einem der Kondensatoren in einer der Ausgangsleitungen geführt werden. Dazu ist die Ladeleitung, die nur während des Aufladens elektrisch leitend ist, beispielsweise mit einem Erdleiter des Wechselstromnetzes oder auch anderweitig mit Erde zu verbinden. Hierdurch erfolgt die Definition des elektrischen Potentials der Eingangsleitungen auch dann unmittelbar gegenüber Erde, wenn der jeweilige Nullleiter des Wechselstromnetzes nicht auf Erdpotential festliegt. Allerdings fließen die Ströme beim erfindungsgemäßen Aufladen der Kondensatoren in den Ausgangsleitungen des Wechselrichters dann direkt nach Erde, was unter Umständen nicht zulässig oder nicht erwünscht ist, da beispielsweise eine Fehlerstromschutzeinrichtung des Wechselrichters hierdurch ausgelöst werden kann. Dann ist es auch bei einem nicht direkt auf Erdpotential festliegenden Nullleiter des an den Wechselrichter angeschlossenen Wechselstromnetzes bevorzugt, die Ladeleitung an diesen Nullleiter anzuschließen.

Um bei Aufstartvorgängen einen übermäßigen Stromfluss durch die Diode in der Ladeleitung zu verhindern, kann in der Ladeleitung ein Widerstand angeordnet werden, der dann mit der Diode in Reihe geschaltet ist. Grundsätzlich kann auch eine Drossel oder ein anderes Bauelement den Strom durch die Ladeleitung begrenzen.

Darüber hinaus kann in der Ladeleitung eine Spannungsquelle angeordnet werden, die dann ebenfalls mit der Diode in Reihe geschaltet ist, um das Potenzial der angeschlossenen Eingangsleitung um die Spannung der Spannungsquelle gezielt weiter gegenüber dem Bezugspotenzial zu verschieben. So kann das Potenzial eines angeschlossenen Photovoltaikgenerators beispielsweise insgesamt um diese Spannung gegenüber Erde angehoben oder abgesenkt werden. Der Innenwiderstand der Spannungsquelle kann dabei einen weiteren Widerstand zur Strombegrenzung in der Ladeleitung überflüssig machen.

Unabhängig von der Art und Weise des Aufladens der Kondensatoren in den Ausgangsleitungen des Wechselrichters ist es häufig bevorzugt, dass diese Kondensatoren sämtlich auf eine so hohe Gleichspannung aufgeladen werden, dass das elektrische Potenzial beider Eingangsleitungen des Wechselrichters gegenüber Erde im Betrieb des Wechselrichters immer ein und dasselbe Vorzeichen aufweist. Die Gleichspannung über den Kondensatoren kann auch so groß gewählt werden, dass die Eingangsleitungen eine bestimmte Mindestspannungsdifferenz gegenüber Erde einhalten.

Wie bereits angedeutet wurde, ist das erfindungsgemäße Verfahren insbesondere zur Anwendung bei Wechselrichtern geeignet, die über keine galvanische Trennung verfügen. Die Eingangsleitungen derartiger Wechselrichter können grundsätzlich nicht geerdet werden. Durch das erfindungsgemäße Verfahren kann dennoch eine einfache Definition des elektrischen Potenzials der Eingangsleitungen gegenüber Erde erfolgen.

Ganz konkret können die Eingangsleitungen und die Ausgangsleitungen des Wechselrichters bei dem neuen Verfahren direkt an ein und dieselbe Wechselrichterbrücke angeschlossen werden. Der Wechselrichter kann entsprechend einen extrem einfachen Aufbau aufweisen, d.h. im Wesentlichen nur aus der Wechselrichterbrücke bestehen.

Das erfindungsgemäße Verfahren ist nicht auf eine bestimmte Anzahl von Phasen des Wechselrichters beschränkt. Vielmehr kann dieser sowohl ein als auch zwei als auch drei als auch noch mehr Phasen aufweisen. Die Kondensatoren sind dabei in allen stromführenden Ausgangsleitungen, d. h. in der Regel in allen Ausgangsleitungen bis auf Potenzial Erde (PE) vorzusehen. Zudem kann bei Wechselrichtern, deren N-Leitung nur zu Messzwecken genutzt wird, auf einen Kondensator in dieser Leitung in der Regel verzichtet werden.

Bei dem erfindungsgemäßen Verfahren sind die Kondensatoren, die auf die Gleichspannung aufgeladen werden, in den Ausgangsleitungen des Wechselrichters angeordnet, die an das Wechselstromnetz angeschlossen werden, um einen Wechselstrom in das Wechselstromnetz einzuspeisen. Es handelt sich insbesondere nicht um irgendwelche vor dem einspeisenden Wechselrichter angeordnete Resonanzkapazitäten von Reihenresonanzkreisen. Im Gegenteil würde die durch solche Resonanzkapazitäten bewirkte galvanische Trennung zwischen den Eingangsleitungen, an die die Gleichspannungsquelle angeschlossen wird, und den Ausgangsleitungen, die an das Wechselstromnetz angeschlossen werden, dazu führen, dass eine Aufladung von Kondensatoren in diesen Ausgangsleitungen gerade nicht die gewünschte Potenzialdefinition der Eingangsleitungen zur Folge hätte.

Bei einem erfindungsgemäßen Wechselrichter mit Eingangsleitungen zum Anschluss an eine Gleichstromquelle, Ausgangsleitungen zum Ausgeben eines Wechselstroms und Einrichtungen zur Definition eines elektrischen Potenzials der Eingangsleitungen gegenüber Erde umfassen diese Einrichtungen in allen stromführenden Ausgangsleitungen des Wechselrichters angeordnete Kondensatoren und eine Aufladeeinrichtung, die die Kondensatoren auf eine Gleichspannung auflädt, um das elektrische Potenzial der Eingangsleitungen gegenüber einem an den stromführenden Ausgangsleitungen des Wechselrichters vorliegenden Bezugspotenzial um diese Gleichspannung zu verschieben, ohne das Potenzial durch eine dauerhaft elektrisch leitende Verbindung vorzugeben.

Die Aufladeeinrichtung weist eine Ladeleitung auf, die zu einem Punkt vor einem der Kondensatoren in einer der Ausgangsleitungen führt und in der ein Schaltelement angeordnet ist, das nur während des Aufladens elektrisch leitend ist.

Es versteht sich, dass durch die erfindungsgemäß in den Ausgangsleitungen des Wechselrichters vorgesehenen Kondensatoren eine galvanische Trennung zwischen den vor und hinter den Kondensatoren liegenden Punkten der jeweiligen Ausgangsleitungen bewirkt wird. Diese galvanische Trennung bleibt jedoch nicht erhalten, wenn eine Aufladung der Kondensatoren über eine Ladeleitung erfolgt, die von einem Punkt hinter einem der Kondensatoren in einer der Ausgangsleitungen bis zu einem Punkt vor diesem Kondensator führt. Auch wenn in dieser Ladeleitung das Schaltelement angeordnet ist, das nur während des Aufladens elektrisch leitend ist, verhindert es eine dauerhafte galvanische Trennung. Die galvanische Trennung bleibt hingegen erhalten, wenn die Ladeleitung von Erde zum Beispiel bis zu einer der Eingangsleitungen oder bis zu einem Zwischenpunkt eines Spannungsteilers zwischen den Eingangsleitungen führt.

Die Einrichtungen des erfindungsgemäßen Wechselrichters zur Definition des elektrischen Potenzials der Eingangsleitungen des erfindungsgemäßen Wechselrichters können in einem eigenen Gehäuse mit eigenen Anschlüssen oder zusammen mit einem DC/AC-Wandler des Wechselrichters in einem gemeinsamen Gehäuse mit gemeinsamen Anschlüssen angeordnet sein. Während letztere Variante, bei der der gesamte Wechselrichter in einem Gehäuse untergebracht ist, insbesondere für die Neuherstellung erfindungsgemäßer Wechselrichter bevorzugt sein mag, kann die erstere Vorteile beim erfindungsgemäßen Nachrüsten vorhandener Wechselrichter haben.

Bezüglich bevorzugter Details des erfindungsgemäßen Wechselrichters wird auf die Beschreibung des erfindungsgemäßen Verfahrens verwiesen.

Eine vorteilhafte Verwendung erfährt der erfindungsgemäße Wechselrichter beim Einspeisen elektrischer Leistung von einem Photovoltaikgenerator, insbesondere einem Photovoltaikgenerator mit Dünnschichtmodulen, die bei bestimmten elektrischen Potenzialen gegenüber Erde bzw. gegenüber ihrer Umgebung empfindlich reagieren, in ein Wechselstromnetz.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile von allen erfindungsgemäßen Ausführungsformen erzielt werden müssen. Weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können einzelne der in einem abhängigen Patentanspruch aufgeführten Merkmale für weitere Ausführungsformen der Erfindung entfallen.

### KURZBESCHREIBUNG DER FIGUREN

Die Erfindung wird im Folgenden anhand von Ausführungsbeispielen und unter Bezugnahme auf die beigefügten Zeichnungen näher erläutert und beschrieben.
- **Fig. 1**: illustriert die Durchführung des erfindungsgemäßen Verfahrens an einem einphasigen Wechselrichter bzw. einen daraus resultierenden erfindungsgemäßen Wechselrichter.
- **Fig. 2**: illustriert eine konkrete Ausführungsform des erfindungsgemäßen Wechselrichters gemäß Fig. 1.
- **Fig. 3**: illustriert eine weitere Ausführungsform des erfindungsgemäßen Verfahrens an einem einphasigen Wechselrichter und den daraus resultierenden erfindungsgemäßen Wechselrichter.
- **Fig. 4**: illustriert noch eine weitere Ausführungsform des erfindungsgemäßen Verfahrens an einem einphasigen Wechselrichter und den daraus resultierenden erfindungsgemäßen Wechselrichter.
- **Fig.5**: illustriert einen möglichen Aufbau eines erfindungsgemäßen dreiphasigen Wechselrichters; und
- **Fig. 6**: illustriert noch eine weitere Ausführungsform des erfindungsgemäßen Verfahrens an einem einphasigen, hier in ein TT-Netz einspeisenden Wechselrichter und den daraus resultierenden erfindungsgemäßen Wechselrichter.

### FIGURENBESCHREIBUNG

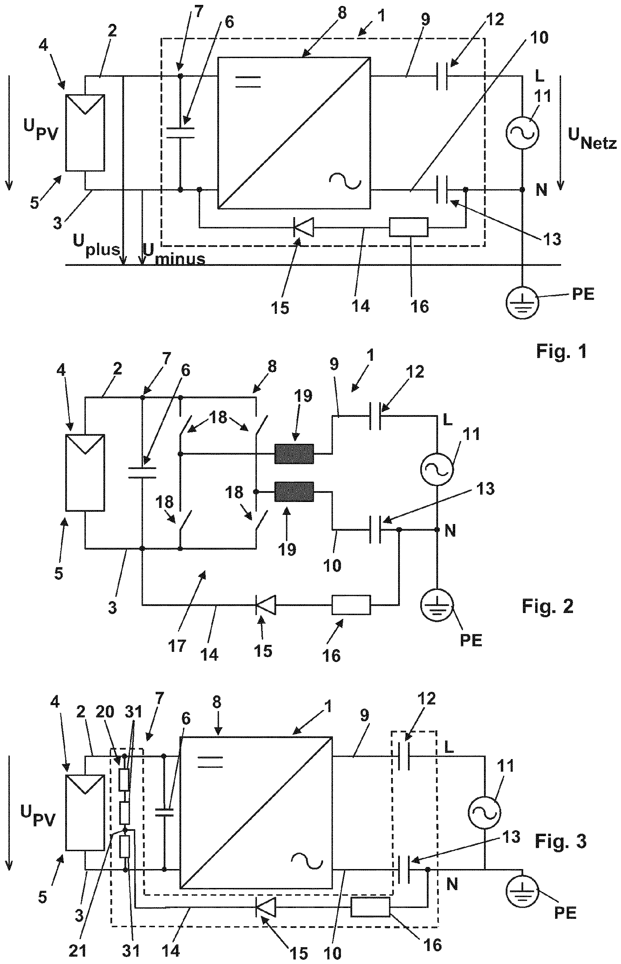

Der in **Fig. 1** dargestellte Wechselrichter 1 weist zwei Eingangsleitungen 2 und 3 auf, die an eine Gleichstromquelle 4, hier in Form eines Photovoltaikgenerators 5, angeschlossen sind. Ein Pufferkondensator 6 zwischen den Eingangsleitungen 2 und 3 bildet einen Gleichspannungszwischenkreis 7 aus, der die Spannung U_{PV} des Photovoltaikgenerators 5 zwischen den Eingangsleitungen 2 und 3 stabilisiert. Der Pufferkondensator 6 kann wie bekannt auch aus einer Mehrzahl einzelner Pufferkondensatoren aufgebaut sein. Hinter dem Gleichspannungszwischenkreis 7 sind die Eingangsleitungen 2 und 3 an einen DC/AC-Wandler 8 angeschlossen. Von dem DC/AC-Wandler 8 ausgehende stromführende Ausgangsleitungen 9 und 10 sind an ein Wechselstromnetz 11 angeschlossen. Konkret ist die Ausgangsleitung 9 an den L-Leiter und die Ausgangsleitung 10 an den Nullleiter N des Wechselstromnetzes 11 angeschlossen. Zwischen dem DC/AC-Wandler 8 und dem Wechselstromnetz 11 ist in den Ausgangsleitungen 9 und 10 jeweils ein Kondensator 12 bzw. 13 vorgesehen. Diese beiden Kondensatoren 12 und 13 werden im Betrieb des Wechselrichters 1 mit einer Gleichspannung beaufschlagt, die bei dem Kondensator 12 mit der Netzwechselspannung U_{Netz} überlagert ist. Durch die Gleichspannung über den Kondensatoren 12 und 13 verschiebt sich das elektrische Potenzial der Eingangsleitungen 2 und 3 gegenüber Potenzial Erde PE. So kann beispielsweise das elektrische Potenzial der Eingangsleitung 3, das um die Spannung U_{PV} niedriger als das elektrische Potenzial der Eingangsleitung 2 ist, so weit angehoben werden, dass es, insbesondere trotz durch die Wechselspannung U_{Netz} verursachter Schwankungen, nie negativ wird. Die Aufladung der Kondensatoren 12 und 13 wird hier durch eine Ladeleitung 14 bewirkt, die die Eingangsleitung 3 mit der netzseitigen Seite des Kondensators 13 verbindet, und in der eine Diode 15 vorgesehen ist. Die Durchlassrichtung der Diode 15 verläuft von dem Nullleiter des Wechselstromnetzes 11 zu der Eingangsleitung 3. So fließt so lange Strom durch die Diode 15, bis die Gleichspannung über den Kondensatoren 12 und 13 so weit angestiegen ist, dass das minimale elektrische Potenzial der Eingangsleitung 3 nicht mehr unter Potenzial Erde PE abfällt. Ein Widerstand 16 in der Ladeleitung 14 verhindert einen übermäßigen Stromfluss durch die Diode 15 beim Aufstarten des Wechselrichters 1, d. h. wenn die Gleichspannung über den Kondensatoren 12 und 13 noch null ist. Eine gestrichelte Linie in Fig. 1 deutet an, dass alle Bestandteile des Wechselrichters 1 einschließlich des DC/AC-Wandlers 8, des Pufferkondensators 6 und der Einrichtungen 12 bis 16 zum Definieren des elektrischen Potenzials der Eingangsleitungen 2 und 3 gegenüber Erde in einem gemeinsamen Gehäuse mit gemeinsamen Anschlüssen nach außen untergebracht sein können.

**Fig. 2** zeigt die Ausbildung des DC/AC-Wandlers 8 durch eine H-Brücke 17 mit vier Schaltern 18 und zwei ausgangsseitigen Drosseln 19. Die Schalter 18 sind dabei vielfach, aber nicht zwingend Leistungshalbleiterschalter mit inhärenten antiparallelen Dioden in üblicher Anordnung (nicht dargestellt). Die Schalter 18 der H-Brücke 17 werden in an sich üblicher Weise getaktet, d. h. zur Stromformung zumindest teilweise hochfrequent betätigt. Über die Schalter 18 werden die Ausgangsleitungen 9 und 10 im Betrieb des Wechselrichters 1 wechselweise und vorübergehend mit den Eingangsleitungen 2 und 3 verbunden. Gegenüber dem L-Leiter und dem Nullleiter des Wechselstromnetzes 11 wird diese galvanische Verbindung durch die Kondensatoren 12 und 13 soweit unterbrochen, dass das Potenzial der Eingangsleitungen 2 und 3 gegenüber dem an den Ausgangsleitungen 9 und 10 vorliegenden Bezugspotenzial verschoben werden kann. Aufgrund der Ladeleitung 14 besteht aber keine galvanische Trennung zwischen den Eingangsleitungen 2 und 3 und den Ausgangsleitungen 9 und 10, wie sie z. B. in den US-Normen gefordert wird.

Bei der Ausführungsform des Wechselrichters 1 gemäß **Fig. 3** ist in dem Gleichspannungszwischenkreis 7 neben dem Pufferkondensator 6 aus Widerständen 31 ein Spannungsteiler 20 für die Spannung U_{PV} der Gleichstromquelle 4 ausgebildet. Dabei führt die Ladeleitung 14 zu einem Zwischenpunkt 21 des Spannungsteilers 20. Entsprechend werden die Kondensatoren 12 und 13 über die Ladeleitung 14 hier so aufgeladen, dass das elektrische Potenzial dieses Zwischenpunkts 21 nicht unter PE abfällt. Darüber hinaus deutet eine gestrichelte Linie in Fig. 3 an, dass die Einrichtungen 12 bis 16 und 20 zum Definieren des elektrischen Potenzials der Eingangsleitungen 2 und 3 gegenüber dem Bezugspotenzial des Nullleiters N auch in einem eigenen Gehäuse mit eigenen Anschlüssen für die Eingangsleitungen 2 und 3 sowie für die Ausgangsleitungen 9 und 10 untergebracht sein können.

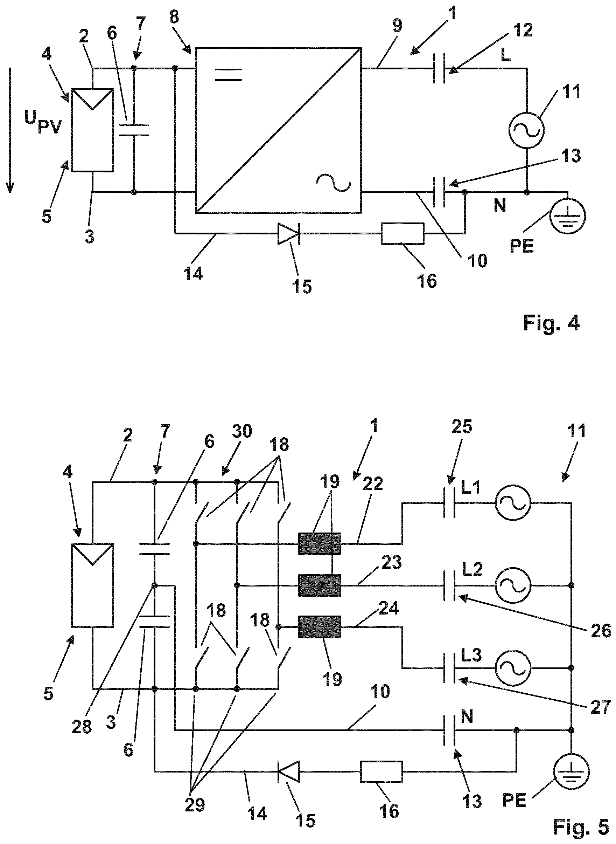

Bei der Ausführungsform des Wechselrichters 1 gemäß **Fig. 4** ist die Eingangsleitung 2, die auf höherem elektrischem Potenzial liegt als die Eingangsleitung 3, an die Ladeleitung 14 angeschlossen. Dabei weist die Diode 15 eine gegenüber den Fig. 1 bis 3 umgekehrte Durchlassrichtung auf. Dies hat zur Folge, dass die Gleichspannung, auf die die Kondensatoren 12 und 13 aufgeladen werden, ein gegenüber den Ausführungsformen gemäß den Fig. 1 bis 3 umgekehrtes Vorzeichen aufweist und so groß wird, dass das elektrische Potenzial an den Eingangsleitungen und damit an jedem Punkt des Photovoltaikgenerators 5 das Erdpotential PE nicht überschreitet, d. h., dass das Potential gegenüber Erde immer negativ ist.

**Fig. 5** skizziert eine dreiphasige Ausführungsform des Wechselrichters 1 mit drei Ausgangsleitungen 22, 23 und 24 zu den Leitern L1, L2 und L3 des hier dreiphasigen Wechselstromnetzes 11 neben der Ausgangsleitung 10 zu dem Nullleiter N. Entsprechend sind hier insgesamt vier Kondensatoren 13 und 25 bis 27 in den stromführenden Ausgangsleitungen 10 und 22 bis 24 vorgesehen. Die Ausgangsleitung 10 führt von einem Mittelpunkt 28 eines hier aus zwei Pufferkondensatoren 6 ausgebildeten Gleichspannungszwischenkreises 7 zwischen den Eingangsleitungen 2 und 3 zu dem Kondensator 13. Die Ausgangsleitungen 22 bis 24 sind jeweils an Halbbrücken 29 mit den Schaltern 18 und den Drosseln 19 einer Wechselrichterbrücke 30 angeschlossen. Dies entspricht dem üblichen Aufbau einer einfachen dreiphasigen Wechselrichterbrücke 30. Die Ladeleitung 14 ist wieder an den Nullleiter angeschlossen und verbindet diesen über die Diode 15 mit der Eingangsleitung 3. Dabei wird aus der Schaltung gemäß Fig. 5 deutlich, dass die Gleichspannung, auf die der Kondensator 13 und die anderen Kondensatoren 25 bis 27 aufgeladen werden, grundsätzlich genauso groß ist, wie eine über dem zwischen Mittelpunkt 28 und der Eingangsleitung 3 liegenden Pufferkondensator 6 abfallende Gleichspannung. Gerade hierdurch wird eine Verschiebung des elektrischen Potenzials der Eingangsleitung 3 gegenüber PE erreicht, bei der das elektrische Potenzial der Eingangsleitung 3 niemals unter PE abfällt und damit kein Punkt des Photovoltaikgenerators 5 jemals ein negatives elektrisches Potenzial gegenüber der Umgebung des Photovoltaikgenerators 5 aufweist.

Wenn der Nullleiter N im Wesentlichen zu Mess- und Sicherheitszwecken vorgesehen, d. h. anders als in Fig. 5 keine stromführende Leitung ist, ist der Kondensator 13 in der Ausgangsleitung 10 zu dem Nullleiter N optional.

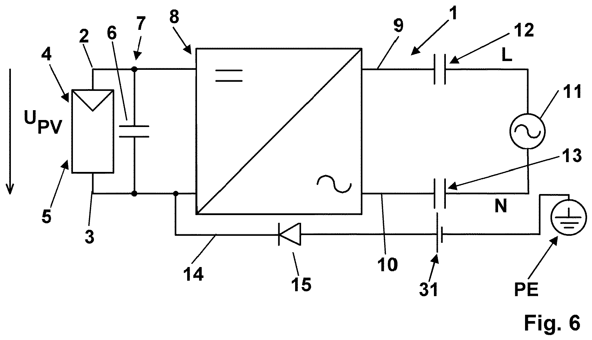

Bei dem Wechselrichter 1 gemäß **Fig. 6** ist dargestellt, dass dieser in ein Wechselstromnetz 11 einspeist, bei dem der Nullleiter N nicht mit Erde PE verbunden ist, aber dennoch eine Verbindung zu Erde PE verfügbar ist, die beispielsweise benötigt wird, um ein Gehäuse des Wechselrichters 1 zu erden. Dann kann die Ladeleitung 14 wie dargestellt auch von Erde PE zu einer der Eingangsleitungen oder einem dazwischen liegenden Zwischenpunkt, hier der Eingangsleitung 3, verlaufen. Dabei ist in Fig. 6 zusätzlich dargestellt, dass statt eines Widerstands auch eine Spannungsquelle 31 in der Ladeleitung 14 vorgesehen sein kann, um das Potential der Eingangsleitungen auf ein durch die Spannungsquelle 31 definiertes Niveau gegenüber Erde anzuheben. Allerdings ist es auch bei einem Wechselstromnetz 11, bei dem der Nullleiter N keinen unmittelbaren Kontakt zu Erde PE aufweist, d. h. beispielsweise bei einem so genannten TT-Netz, häufig sinnvoll, die Ladeleitung 14 vom Nullleiter N aus vorzusehen, um zu vermeiden, dass Ströme nach Erde PE fließen. Die Spannungsquelle 31 kann auch in einer solchen mit dem Nullleiter N verbundenen Ladeleitung 14 vorgesehen sein.

### BEZUGSZEICHENLISTE

- 1: Wechselrichter
- 2: Eingangsleitung
- 3: Eingangsleitung
- 4: Gleichstromquelle
- 5: Photovoltaikgenerator
- 6: Pufferkondensator
- 7: Gleichspannungszwischenkreis
- 8: DC/AC-Wandler
- 9: Ausgangsleitung
- 10: Ausgangsleitung
- 11: Wechselstromnetz
- 12: Kondensator
- 13: Kondensator
- 14: Ladeleitung
- 15: Diode
- 16: Widerstand
- 17: H-Brücke
- 18: Schalter
- 19: Drossel
- 20: Spannungsteiler
- 21: Zwischenpunkt
- 22: Ausgangsleitung
- 23: Ausgangsleitung
- 24: Ausgangsleitung
- 25: Kondensator
- 26: Kondensator
- 27: Kondensator
- 28: Mittelpunkt
- 29: Halbbrücke
- 30: Wechselrichterbrücke
- 31: Spannungsquelle

## Patentansprüche

1. Verfahren zur Definition eines elektrischen Potenzials von Eingangsleitungen (2, 3) eines Wechselrichters (1) gegenüber Erde (PE), nach dem in allen stromführenden Ausgangsleitungen (9, 10, 22 bis 24) des Wechselrichters (1) Kondensatoren (12, 13, 25 bis 27) angeordnet und auf eine Gleichspannung aufgeladen werden, um das elektrische Potenzial der Eingangsleitungen (2, 3) gegenüber einem an den stromführenden Ausgangsleitungen des Wechselrichters vorliegenden Bezugspotenzial um diese Gleichspannung zu verschieben.

2. Verfahren nach Anspruch 1, **dadurch gekennzeichnet, dass** die Kondensatoren (12, 13, 25 bis 27) sämtlich auf dieselbe Gleichspannung aufgeladen werden.

3. Verfahren nach Anspruch 1 oder 2, **dadurch gekennzeichnet, dass** die Kondensatoren (12, 13, 25 bis 27) über eine Ladeleitung (14) aufgeladen werden, die von einem Punkt hinter einem der Kondensatoren (13) in einer der Ausgangsleitungen (9, 10, 22 bis 24) bis zu einem Punkt vor diesem Kondensator (13) führt und die nur während des Aufladens elektrisch leitend ist, und dass die Ladeleitung (14) optional von dem Punkt hinter dem Kondensator (13) in der Ausgangsleitung (10) zu einem Nullleiter (N) bis zu einer der Eingangsleitungen (2, 3) oder bis zu einem Zwischenpunkt (21) eines Spannungsteilers (20) zwischen den Eingangsleitungen (2, 3) führt, wobei in der Ladeleitung (14) eine Diode (15) angeordnet ist.

4. Verfahren nach Anspruch 1 oder 2, **dadurch gekennzeichnet, dass** die Kondensatoren (12, 13, 25 bis 27) über eine Ladeleitung (14) aufgeladen werden, die von Erde (PE) bis zu einem Punkt vor einem der Kondensatoren (13) in einer der Ausgangsleitungen (9, 10, 22 bis 24) führt und die nur während des Aufladens elektrisch leitend ist, und dass die Ladeleitung (14) optional von Erde (PE) bis zu einer der Eingangsleitungen (2, 3) oder bis zu einem Zwischenpunkt (21) eines Spannungsteilers (20) zwischen den Eingangsleitungen (2, 3) führt, wobei in der Ladeleitung (14) eine Diode (15) angeordnet ist.

5. Verfahren nach Anspruch einem der Ansprüche 3 und 4, **dadurch gekennzeichnet, dass** in der Ladeleitung (14) ein Widerstand (16) und/oder eine Spannungsquelle (31) mit der Diode (15) oder einem anderen Schaltelement, das nur während des Aufladens elektrisch leitend ist, in Reihe geschaltet ist.

6. Verfahren nach einem der vorhergehenden Ansprüche, **dadurch gekennzeichnet, dass** die Kondensatoren (12, 13, 25 bis 27) sämtlich auf eine so hohe Gleichspannung aufgeladen werden, dass das elektrische Potenzial beider Eingangsleitungen (2, 3) gegenüber Erde PE im Betrieb des Wechselrichters (1) immer ein und dasselbe Vorzeichen aufweist.

7. Verfahren nach einem der vorhergehenden Ansprüche, **dadurch gekennzeichnet, dass** die Ausgangsleitungen (9, 10, 22 bis 24) im Betrieb des Wechselrichters (1) mit den Eingangsleitungen (2, 3) verbunden werden und/oder dass die Eingangsleitungen (2, 3) und die Ausgangsleitungen (9, 10, 22 bis 24) an ein und dieselbe Wechselrichterbrücke (17, 30) angeschlossen werden.

8. Verfahren nach einem der vorhergehenden Ansprüche, **dadurch gekennzeichnet, dass** die Ausgangsleitungen (9, 10, 22 bis 24) an ein Wechselstromnetz (11) angeschlossen werden, um einen Wechselstrom in das Wechselstromnetz (11) einzuspeisen.

9. Wechselrichter (1) mit Eingangsleitungen (2, 3) zum Anschluss an eine Gleichstromquelle (4), Ausgangsleitungen (9, 10, 22 bis 24) zum Ausgeben eines Wechselstroms und Einrichtungen zur Definition eines elektrischen Potenzials der Eingangsleitungen (2, 3) gegenüber Erde (PE), wobei die Einrichtungen in allen stromführenden Ausgangsleitungen (9, 10, 22 bis 24) des Wechselrichters (1) angeordnete Kondensatoren (12, 13, 25 bis 27) und eine Aufladeeinrichtung (14, 15, 16) umfassen, die die Kondensatoren (12, 13, 25 bis 27) auf eine Gleichspannung auflädt, um das elektrische Potenzial der Eingangsleitungen (2, 3) gegenüber einem an den stromführenden Ausgangsleitungen des Wechselrichters vorliegenden Bezugspotenzial um diese Gleichspannung zu verschieben, ohne das Potenzial der Eingangsleitungen (2, 3) durch eine dauerhaft elektrisch leitende Verbindung vorzugeben.

10. Wechselrichter (1) nach Anspruch 9, **dadurch gekennzeichnet, dass** die Aufladeeinrichtung eine Ladeleitung (14) aufweist, die von einem Punkt hinter einem der Kondensatoren (13) in einer der Ausgangsleitungen (9, 10, 22 bis 24) bis zu einem Punkt vor diesem Kondensator (13) führt und in der ein Schaltelement angeordnet ist, das nur während des Aufladens elektrisch leitend ist, und dass die Ladeleitung (14) optional von einem Punkt hinter dem Kondensator (13) in der zu einem Nullleiter (N) führenden Ausgangsleitung (10) bis zu einer der Eingangsleitungen (2, 3) oder bis zu einem Zwischenpunkt (21) eines Spannungsteilers (20) zwischen den Eingangsleitungen (2, 3) führt, wobei das Schaltelement in der Ladeleitung (14) eine Diode (15) ist.

11. Wechselrichter (1) nach Anspruch 9, **dadurch gekennzeichnet, dass** die Aufladeeinrichtung eine Ladeleitung (14) aufweist, die von Erde (PE) bis zu einem Punkt vor einem der Kondensatoren (13) in einer der Ausgangsleitungen (9, 10, 22 bis 24) führt und in der ein Schaltelement angeordnet ist, das nur während des Aufladens elektrisch leitend ist, und dass die Ladeleitung (14) optional von Erde (PE) bis zu einer der Eingangsleitungen (2, 3) oder bis zu einem Zwischenpunkt (21) eines Spannungsteilers (20) zwischen den Eingangsleitungen (2, 3) führt, wobei das Schaltelement in der Ladeleitung (14) eine Diode (15) ist.

12. Wechselrichter (1) nach einem der Ansprüche 10 und 11, **dadurch gekennzeichnet, dass** in der Ladeleitung (14) ein Widerstand (16) und/oder eine Spannungsquelle (31) mit dem Schaltelement in Reihe geschaltet ist.

13. Wechselrichter (1) nach einem der Ansprüche 9 bis 12, **dadurch gekennzeichnet, dass** Schalter (18) vorgesehen sind, die die Ausgangsleitungen (9, 10, 22 bis 24) mit den Eingangsleitungen (2, 3) verbinden und/oder dass die Eingangsleitungen (2, 3) und die Ausgangsleitungen (9, 10, 22 bis 24) an ein und dieselbe Wechselrichterbrücke (17, 30) angeschlossen sind.

14. Wechselrichter (1) nach einem der Ansprüche 9 bis 13, **dadurch gekennzeichnet, dass** die Einrichtungen zur Definition des elektrischen Potenzials der Eingangsleitungen (2, 3) in einem eigenen Gehäuse mit eigenen Anschlüssen oder zusammen mit einem DC/AC-Wandler des Wechselrichters (1) in einem gemeinsamen Gehäuse mit gemeinsamen Anschlüssen vorgesehen sind.

15. Verwendung eines Wechselrichters (1) nach einem der Ansprüche 9 bis 14 zum Einspeisen elektrischer Leistung von einem Photovoltaikgenerator (5), insbesondere einem Photovoltaikgenerator (5) mit Dünnschichtmodulen, in ein Wechselstromnetz (11).

## Claims

1. A method of defining an electric potential of input lines (2, 3) of an inverter (1) with respect to ground (PE), wherein in all current-carrying output lines (9, 10, 22 to 24) of the inverter (1) capacitors (12, 13, 25 to 27) are arranged and charged to a DC voltage in order to shift the electric potential of the input lines (2, 3) with respect to a reference potential at one of the current-carrying output lines of the inverter by this DC voltage.

2. The method of claim 1, **characterized in that** the capacitors (12, 13, 25 to 27) are all charged to the same DC voltage.

3. The method of claim 1 or 2, **characterized in that** the capacitors (12, 13, 25 to 27) are charged via a charging line (14) that leads from a point downstream of one of the capacitors (13) in one of the output lines (9, 10, 22 to 24) up to a point upstream of this capacitor (13) and that is electrically conductive only during charging, and **in that** the charging line (14) optionally leads from the point downstream of the capacitor (13) in the output line (10) to a neutral conductor (N) up to one of the input lines (2, 3) or up to an intermediate point (21) of a voltage divider (20) between the input lines (2, 3), wherein a diode (15) is arranged in the charging line (14).

4. The method of claim 1 or 2, **characterized in that** the capacitors (12, 13, 25 to 27) are charged via a charging line (14) that leads from ground (PE) up to a point upstream of one of the capacitors (13) in one of the output lines (9, 10, 22 to 24) and that is electrically conductive only during charging, and **in that** the charging line (14) optionally leads from ground (PE) up to one of the input lines (2, 3) or up to an intermediate point (21) of a voltage divider (20) between the input lines (2, 3), wherein a diode (15) is arranged in the charging line (14).

5. The method of any of the claims 3 and 4, **characterized in that** in the charging line (14) a resistor (16) and/or a voltage source (31) are connected in series with the diode (15) or with another switching element that is electrically conductive only during charging.

6. The method of any of the preceding claims, **characterized in that** the capacitors (12. 13, 25 to 27) are all charged to such a high DC voltage that the electric potential of both input lines (2, 3) with respect to ground (PE) has always one and the same sign during operation of the inverter (1).

7. The method of any of the preceding claims, **characterized in that** the output lines (9, 10, 22 to 24) are connected to the input lines (2, 3) during operation of the inverter (1), and/or **in that** the input lines (2, 3) and the output lines (9, 10, 22 to 24) are connected to one and the same inverter bridge (17, 30).

8. The method of any of the preceding claims, **characterized in that** the output lines (9, 10, 22 to 24) are connected to an AC power grid (11) in order to feed an AC current into the AC power grid (11).

9. An inverter (1) comprising input lines (2, 3) for connection to a DC current source (4), output lines (9, 10, 22 to 24) for outputting an AC current and devices for defining an electric potential of the input lines (2, 3) with respect to ground (PE), wherein the devices include capacitors (12, 13, 25 to 27) arranged in all current-carrying output lines (9, 10, 22 to 24) of the inverter (1) and a charging device (14, 15, 16) that charges the capacitors (12, 13, 25 to 27) to a DC voltage in order to shift the electric potential of the input lines (2, 3) with respect to a reference potential present at the current-carrying output lines of the inverter by this DC voltage without predefining the potential of the input lines (2, 3) by means of a permanently electrically conductive connection.

10. The inverter (1) of claim 9, **characterized in that** the charging device comprises a charging line (14) that leads from a point downstream of one of the capacitors (13) in one of the output lines (9, 10, 22 to 24) up to a point upstream of this capacitor (13) and in which a switching element is arranged that is electrically conductive only during charging, and **in that** the charging line (14) optionally leads from a point downstream of the capacitor (13) in the output line (10) leading to a neutral conductor (N) up to one of the input lines (2, 3) or up to an intermediate point (21) of a voltage divider (20) between the input lines (2, 3), wherein the switching element in the charging line (14) is a diode (15).

11. The inverter (1) of claim 9, **characterized in that** the charging device comprises a charging line (14) that leads from ground (PE) up to a point upstream of one the capacitors (13) in one of the output lines (9, 10, 22 to 24) and in which a switching element is arranged that is electrically conductive only during charging, and **in that** the charging line (14) optionally leads from ground (PE) up to one of the input lines (2, 3) or up to an intermediate point (21) of a voltage divider (20) between the input lines (2, 3), wherein the switching element in the charging line (14) is a diode (15).

12. The inverter (1) according to any of the claims 10 and 11, **characterized in that** in the charging line (14) a resistor (16) and/or a voltage source (31) are connected in series with the switching element.

13. The inverter (1) of any of the claims 9 to 12, **characterized in that** switches (18) are provided that connect the output lines (9, 10, 22 to 24) to the input lines (2, 3), and/or **in that** the input lines (2, 3) and the output lines (9, 10, 22 to 24) are connected to one and the same inverter bridge (17, 30).

14. The inverter (1) according to any of the claims 9 to 13, **characterized in that** the devices for defining the electric potential of the input lines (2, 3) are provided in a separate housing with separate connection terminals or together with a DC/AC converter of the inverter (1) in a common housing with common connection terminals.

15. A use of an inverter (1) of any of the claims 9 to 14 for feeding electric power from a photovoltaic generator (5), particularly from a photovoltaic generator (5) comprising thin film modules, into an AC power grid (11).

## Revendications

1. Procédé de définition d'un potentiel électrique de lignes d'entrée (2, 3) d'un onduleur (1) par rapport à la terre (PE), dans lequel, dans toutes les lignes de sortie (9, 10, 22 à 24) de l'onduleur (1) traversé par un courant, des condensateurs (12, 13, 25 à 27) sont disposées et chargées à une tension continue afin de déplacer de cette tension continue le potentiel électrique des lignes d'entrée (2, 3) par rapport à un potentiel de référence présent aux lignes de sortie de l'onduleur traversé par un courant.

2. Procédé selon la revendication 1, **caractérisé en ce que** les condensateurs (12, 13, 25 à 27) sont tous chargés sur la même tension continue.

3. Procédé selon la revendication 1 ou 2, **caractérisé en ce que** les condensateurs (12, 13, 25 à 27) sont chargés par l'intermédiaire d'une ligne de charge (14) qui conduit d'un point en aval de l'un des condensateurs (13) dans l'une des lignes de sortie (9, 10, 22 à 24) jusqu'à un point en amont de ce condensateur (13) et qui n'est électriquement conducteur que pendant la charge, et **en ce que** la ligne de charge (14) en option conduit du point en aval du condensateur (13) dans la ligne de sortie (10) conduisant à un conducteur neutre (N) jusqu'à l'une des lignes d'entrée (2, 3) ou jusqu'à un point intermédiaire (21) d'un diviseur de tension (20) entre les lignes d'entrée (2, 3), et dans lequel une diode (15) est disposée dans la ligne de charge (14).

4. Procédé selon la revendication 1 ou 2, **caractérisé en ce que** les condensateurs (12, 13, 25 à 27) sont chargés par l'intermédiaire d'une ligne de charge (14) qui conduit de la terre (PE) jusqu'à un point en amont de l'un des condensateurs (13) dans l'une des lignes de sortie (9, 10, 22 à 24) et qui n'est électriquement conducteur que pendant la charge, et **en ce que** la ligne de charge (14) en option conduit de la terre (PE) jusqu'à l'une des lignes d'entrée (2, 3) ou jusqu'à un point intermédiaire (21) d'un diviseur de tension (20) entre les lignes d'entrée (2, 3), et dans lequel une diode (15) est disposée dans la ligne de charge (14).

5. Procédé selon l'une des revendications 3 et 4, **caractérisé en ce que** dans la ligne de charge (14) une résistance (16) et/ou une source de tension (31) est connectée en série avec la diode (15) ou un autre élément de commutation qui n'est électriquement conducteur que pendant la charge.

6. Procédé selon l'une des revendications précédentes, **caractérisé en ce que** les condensateurs (12, 13, 25 à 27) sont tous chargés sur une tension continue aussi élevée que le potentiel électrique des deux lignes d'entrée (2, 3) par rapport à la terre (PE) a toujours un même signe pendant le fonctionnement de l'onduleur (1).

7. Procédé selon l'une des revendications précédentes, **caractérisé en ce que** les lignes de sortie (9, 10, 22 à 24) sont connectées aux lignes d'entrée (2, 3) pendant le fonctionnement de l'onduleur, et/ou **en ce que** les lignes d'entrée (2, 3) et les lignes de sortie (9, 10, 22 à 24) sont connectées à un même pont onduleur (17, 30).

8. Procédé selon l'une des revendications précédentes, **caractérisé en ce que** les lignes de sortie (9, 10, 22 à 24) sont connectées à un réseau de courant alternatif (11) afin d'alimenter une courant alternatif dans le réseau de courant alternatif (11).

9. Onduleur (1) comprenant des lignes d'entrée (2, 3) pour la connexion à une source de courant continu (4), des lignes de sortie (9, 10, 22 à 24) pour délivrer un courant alternatif, et des dispositifs pour définir un potentiel électrique des lignes d'entrée (2, 3) par rapport à la terre (PE), dans lequel les dispositifs comprennent des condensateurs (12, 13, 25 à 27) disposés dans toutes les lignes de sortie (9, 10, 22 à 24) de l'onduleur (1) traversé par un courant et un dispositif de chargement (14, 15, 16) qui charge les condensateurs (12, 13, 25 à 27) à une tension continue pour déplacer de cette tension continue le potentiel électrique des lignes d'entrée (2, 3) par rapport à un potentiel de référence présent aux lignes de sortie de l'onduleur traversé par un courant, sans pré-définir le potentiel des lignes d'entrée (2, 3) au moyen d'une connexion électriquement conductrice permanente.

10. Onduleur (1) selon la revendication 9, **caractérisé en ce que** le dispositif de chargement comprend une ligne de charge (14) qui conduit d'un point en aval d'un des condensateurs (13) dans l'une des lignes de sortie (9, 10, 22 à 24) jusqu'à un point en amont de ce condensateur (13) et dans lequel un élément de commutation est disposé, qui n'est électriquement conducteur que pendant la charge, et **en ce que** la ligne de charge (14) en option conduit du point en aval du condensateur (13) dans la ligne de sortie (10) conduisant à un conducteur neutre (N) jusqu'à l'une des lignes d'entrée (2, 3) ou jusqu'à un point intermédiaire (21) d'un diviseur de tension (20) entre les lignes d'entrée (2, 3), et dans lequel l'élément de commutation dans la ligne de charge (14) est une diode (15).

11. Onduleur (1) selon la revendication 9, **caractérisé en ce que** le dispositif de chargement comprend une ligne de charge (14) qui conduit de la terre (PE) jusqu'à un point en amont de l'un des condensateurs (13) dans l'une des lignes de sortie (9, 10, 22 à 24) et dans lequel un élément de commutation est disposé, qui n'est électriquement conducteur que pendant la charge, et **en ce que** la ligne de charge (14) en option conduit de la terre (PE) jusqu'à l'une des lignes d'entrée (2, 3) ou jusqu'à un point intermédiaire (21) d'un diviseur de tension (20) entre les lignes d'entrée (2, 3), et dans lequel l'élément de commutation dans la ligne de charge (14) est une diode (15).

12. Onduleur (1) selon l'une des revendications 10 et 11, **caractérisé en ce que** dans la ligne de charge (14) une résistance (16) et/ou une source de tension (31) est connectée en série avec l'élément de commutation.

13. Onduleur (1) selon l'une des revendications 9 à 12, **caractérisé en ce que** des commutateurs (18) sont prévus qui relient les lignes de sortie (9, 10, 22 à 24) aux lignes d'entrée (2, 3) et/ou **en ce que** les lignes d'entrée (2, 3) et les lignes de sortie (9, 10, 22 à 24) sont connectées à un même pont onduleur (17, 30).

14. Onduleur (1) selon l'une des revendications 9 à 13, **caractérisé en ce que** les dispositifs pour définir le potentiel électrique des lignes d'entrée (2, 3) sont prévus dans un boîtier séparé avec des bornes de connexion séparées ou ensemble avec un convertisseur CC/AC de l'onduleur (1) dans un boîtier commun avec des bornes de connexion communes.

15. Utilisation d'un onduleur (1) selon l'une des revendications 9 à 14 pour alimenter l'énergie électrique d'un générateur photovoltaïque (5), en particulier d'un générateur photovoltaïque (5) comprenant des modules à couches minces, dans un réseau de courant alternatif (11).
